# EUROPEAN PATENT APPLICATION

(11) **EP 1 211 675 A1**
(43) Date of publication of application: **05.06.2002**
(21) Application number: 00125397.0
(22) Date of filing: 04.12.2000
(51) Int. Cl.: G11B 7/007, G11B 7/00, G11B 7/14

(54) **Data storage medium and associated reading apparatus**

(71) Applicant: Chen, I-Ming, Nei-Hu District, Taipei City (TW)
(72) Inventor: Chen, I-Ming, Nei-Hu District, Taipei City (TW)
(74) Representative: VOSSIUS & PARTNER

(57) **Abstract**

An apparatus is adapted for reading information stored on a data storage medium (1). The data storage medium has a rectangular cardbody (6) with a surface that is formed with a plurality of data storage areas (100). Each of the data storage areas has a plurality of parallel and equally spaced data storage tracks (11). The apparatus has a reading unit, a driving unit and a controlling unit. The reading unit is able to simultaneously read all of the information stored on the data storage tracks of one of the data storage areas. The driving unit moves the reading unit from a position corresponding to one data storage area to a position corresponding to another data storage area. The controlling unit receives the information read by the reading unit.

## Description

The present invention concerns a data storage medium and an apparatus for reading the data storage medium. More specifically, a portable data storage medium that has a relatively large memory capacity, and an apparatus for reading the data storage medium, are disclosed.

It is well known in the art that optical disks have relatively large storage capacities. The conventional optical disk, on the other hand, has a relatively large size, and is thus inconvenient to carry. Furthermore, accessing times for optical disk drives are relatively long. If a manufacturer of an optical disk drive desires to decrease the accessing time of the optical disk drive, he or she must increase the rotation rate of the motor of the optical disk drive. The optical disk drive, thus, will consume relatively more power.

It is therefore a primary object of this invention to provide a portable data storage medium having a relatively large storage capacity. Another object is to provide an apparatus for reading the data storage medium of this invention.

The present invention, briefly summarized, discloses an apparatus for reading a data storage medium. The data storage medium has a rectangular card body having a surface that is formed with a plurality of data storage areas. Each of the data storage areas has a plurality of parallel and equally spaced data storage tracks. The apparatus has a reading unit that can simultaneously read all of the information stored in the data storage tracks of one of the data storage areas.

In a second embodiment of the present invention, the apparatus may have a laser array that can write information onto the data storage medium. Hence, the apparatus can not only read data from the data storage medium but can also write data onto the data storage medium.

In a third embodiment of the present invention, the card body of the data storage medium has a surface that is formed with a plurality of data storage areas that are arranged linearly along a first axis parallel to the data storage areas. Each of the data storage areas is separated into a plurality of data storage blocks that are arranged linearly along a second axis transverse to the first axis. Each of the data storage blocks has a plurality of parallel and equally spaced data storage tracks. The apparatus has a reading unit that can simultaneously read all of the information stored in the data storage tracks of one of the data storage blocks.

These and other objectives of the present invention will no doubt become obvious to those of ordinary skill in the art after reading the following detailed description of the preferred embodiment, which is illustrated in the various figures and drawings.
Fig.1 is a top view of a data storage medium according to the present invention.
Fig.2 is a perspective view of an apparatus according to the present invention with the data storage medium in Fig.1.
Fig.3 is a section view of the apparatus in Fig.2.
Fig.4 is a function block diagram of the apparatus in Fig.2.
Fig.5 is a partial side view of a reading unit of another apparatus according to the present invention.
Fig.6 is a function block diagram of the apparatus in Fig.5.
Fig.7 is a top view of another data storage medium according to the present invention.
Fig.8 is a partial perspective view of a carrying unit of another apparatus according to the present invention.
Fig.9 is a function block diagram of the apparatus in Fig.8.

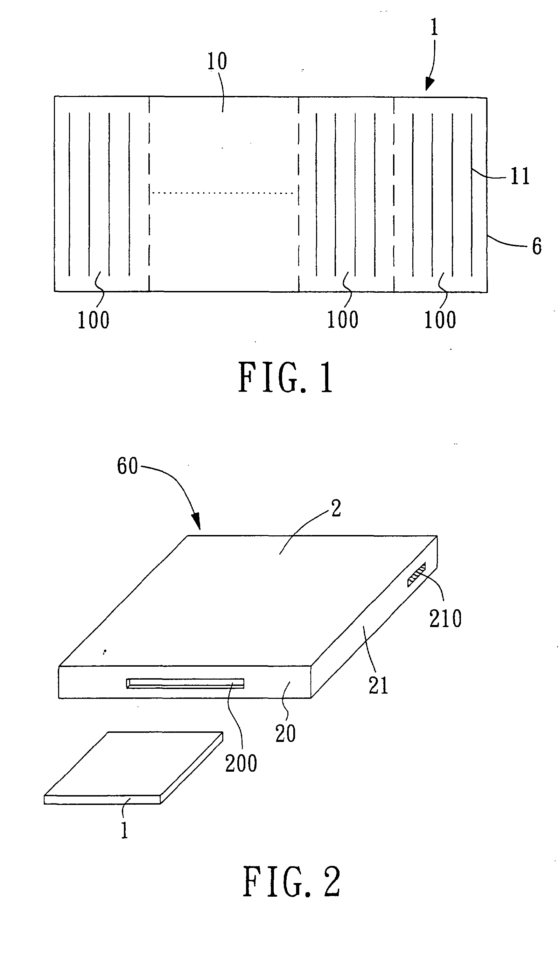

Please refer to Fig.1. Fig.1 is a top view of a data storage medium 1 according to the present invention. The data storage medium 1 is adapted for storing optically encoded information, and comprises a rectangular card body 6 that has a surface 10. The surface 10 is formed with a plurality of data storage areas 100. Each of the data storage areas 100 has a plurality of parallel and equally spaced data storage tracks 11 that are adapted to store the optically encoded information. The data storage areas 100 are arranged linearly along a first axis. The data storage tracks 11 are parallel to a second axis that is transverse to the first axis. Ideally, the first axis is perpendicular to the second axis. In this embodiment, each of the data storage tracks 11 does not connect to the adjacent data storage tracks. Alternatively, each of the data storage tacks 11 may connect to the adjacent data storage tracks to form a continuous data storage tack.

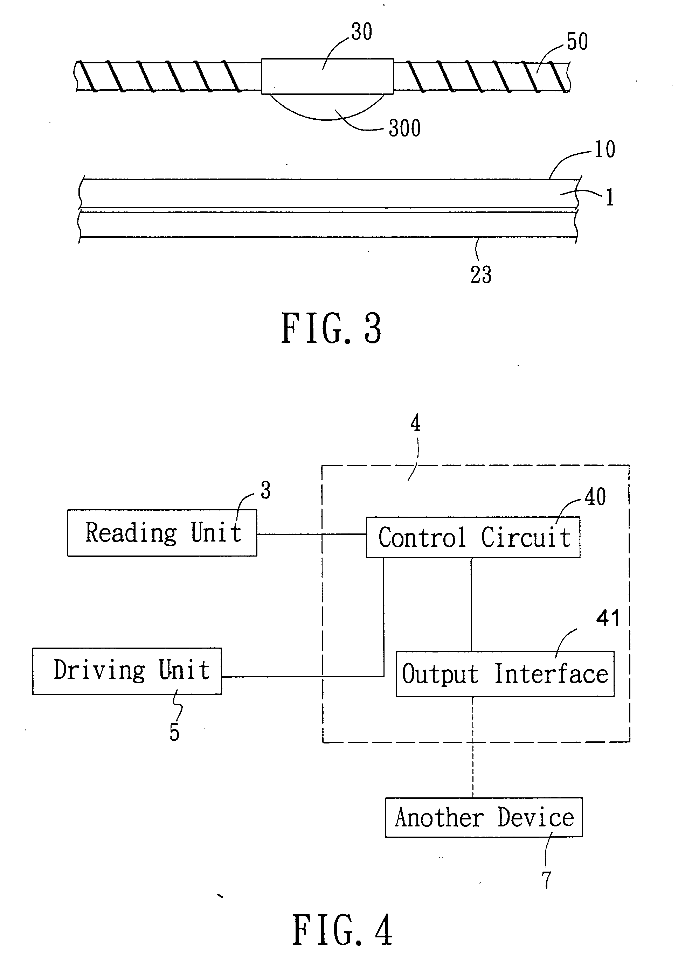

Please refer Fig.2 to Fig.4. Fig.2 is a perspective view of an apparatus 60 according to the present invention with the data storage medium 1 of Fig.1. Fig.3 is a section view of the apparatus 60 in Fig.2. Fig.4 is a function block diagram of the apparatus 60. The apparatus 60 is adapted to read the information stored on the data storage medium 1. The apparatus 60 comprises a housing 2, a reading unit 3, a controlling unit 4 and a driving unit 5. The reading unit 3 is able to simultaneously read all of the information stored in the data storage tracks 11 of one of the data storage areas 100. The driving unit 5 is used to move the reading unit 3 from a position corresponding to one data storage area 100 to a position corresponding to another data storage area 100. The controlling unit 4 is adapted to receive the information read by the reading unit 3. The housing has a first side 20 and a second side 21. The first side 20 has a slot 200 into which is inserted the data storage medium 1. The second side 21 has a connector 210 for connecting to another device 7. When the data storage medium 1 in inserted into the slot 200, the data storage medium 1 is loaded onto a carrier frame 23.

The reading unit 3 is installed in the housing 2, and comprises a charge coupled device (CDD) 30 which is installed above the carrier frame 23. The charge coupled device 30 is used to read the information stored on the data storage tracks 11 of the data storage areas 100. The reading unit 3 further comprises a lens 300 with a size that is approximately equal to the size of a data storage area 100. The reading unit 3 uses the lens 300 to obtain an image of one of the data storage areas 100, and then the controlling unit 4 analyzes the image to decode the associated information. Because of this arrangement, the reading speed of the apparatus 60 according to this invention is faster than that of the prior art. The charge coupled device 30 can be replaced by a CMOS sensor without changing the functionality of the apparatus 60.

The driving unit 5 is installed in the housing 2, and comprises a rotatable shaft 50 that extends along the first axis. The shaft 50 is installed above the carrier frame 23, and the charge coupled device 30 is installed on the shaft 50. When the shaft 50 rotates, the charge coupled device 30 moves from a position corresponding to one data storage area 100 to a position corresponding to another data storage area 100. In this manner, the reading unit 3 can scroll the position of the charge coupled device 30, and thus read all of the data storage areas 100 of the data storage medium 1.

The controlling unit 4 comprises a control circuit 40 and an output interface 41. The control circuit 40 is electrically connected to the reading unit 3. The control circuit 40 process in a predetermined way the information read by the reading unit 3 and transfers the processed information to another device 7 via the output interface 41 and the connector 210.

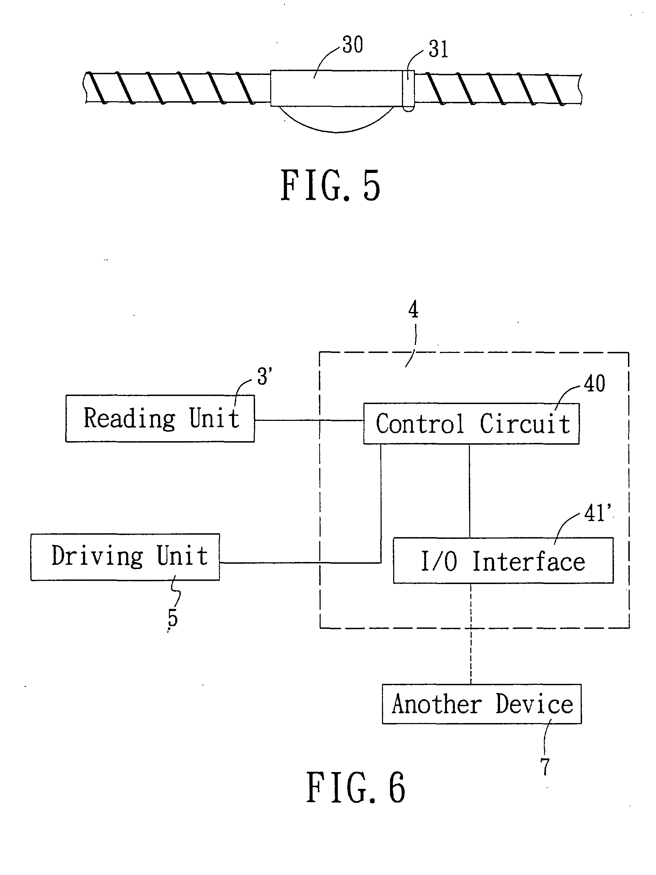

Please refer to Fig.5 and Fig.6. Fig.5 is a partial side view of the reading unit of another apparatus according to the present invention. Fig. 6 is a function block diagram of the apparatus in Fig.5. In this embodiment, the reading unit 3 further comprises a laser array 31 that is installed adjacent to the charged couple device 30 for writing information onto the data storage medium 1. The number of laser diodes in the laser array 31 is sufficient to enable the laser array 31 to simultaneously write information onto one of the data storage tracks. Alternatively, the number of laser diodes in the laser array 31 may be made sufficient to enable the laser array 31 to simultaneously write information onto one of the data storage areas.

As shown in Fig.6, the output interface 41 of the controlling unit 4 shown in Fig.4 is replaced with an I/O interface 41'. The information written onto the data storage medium 1 is delivered to the control circuit 40 via the I/O interface 41'. The control circuit 40 processes the information, and transfers the processed information to the reading unit 3. After the reading unit 3 receives the processed information, the laser array 31 writes the information onto the data storage medium 1.

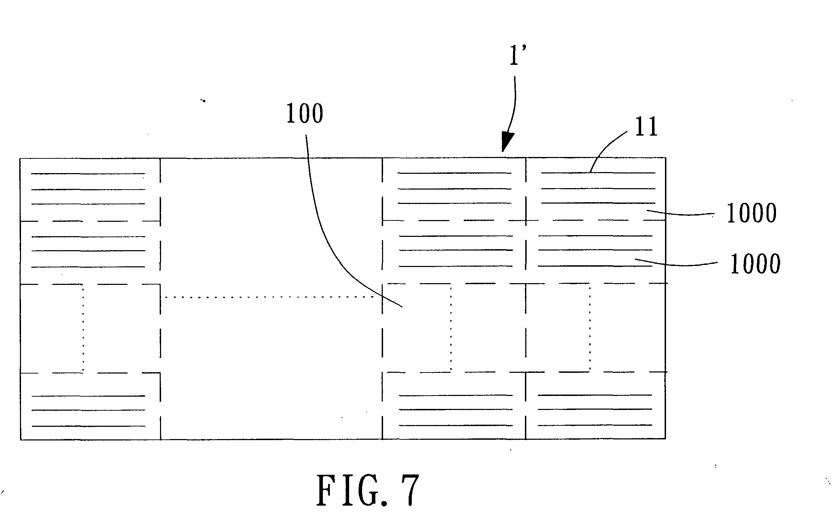

Please refer to Fig.7. Fig.7 is a top view of another data storage medium 1' according to the present invention. In comparison with the first embodiment storage medium 1, each of the data storage areas 100 of the data storage medium 1' is further separated into a plurality of data storage blocks 1000. The data storage blocks 1000 of one of the data storage areas 100 are arranged linearly along the second axis. Each of the data storage blocks 1000 has a plurality of parallel and equally spaced data storage tracks 11. The data storage tracks 11 extend along the first axis. In this embodiment, each of the data storage tracks 11 does not connect to the adjacent data storage tracks. In an alternative arrangement, however, each of the data storage tacks 11 could connect to the adjacent data storage tracks to form a continuous data storage tack.

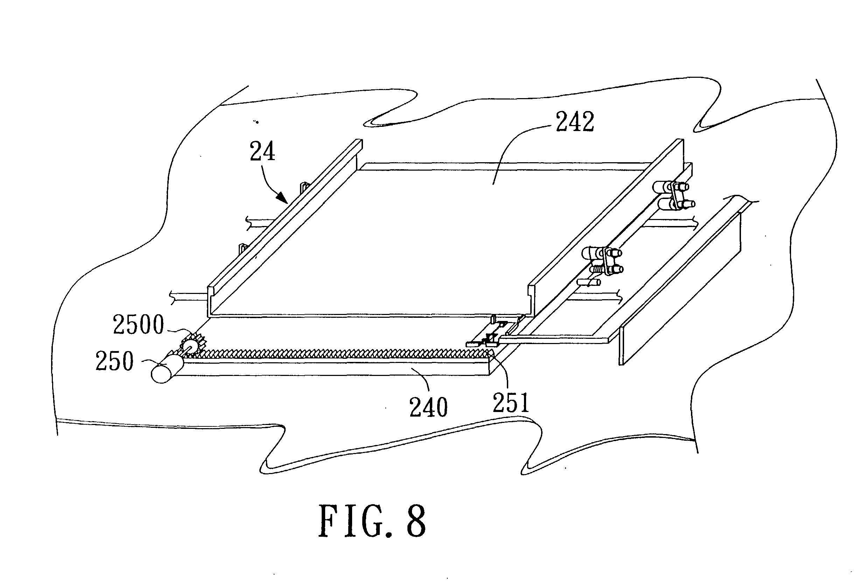

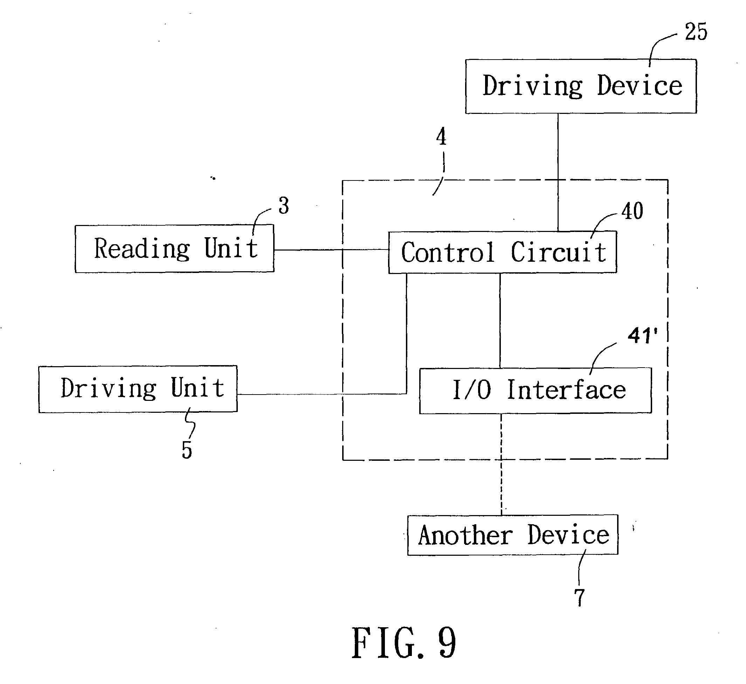

Please refer to Fig.8 and Fig.9. Fig.8 is a partial perspective view of a carrying unit 24 of another apparatus according to the present invention. Fig.9 is a function block diagram of the apparatus in Fig.8. The carrying unit 24 is adapted to carry the data storage medium 1' shown in Fig.7. In comparison with the apparatus shown in Fig. 6, the apparatus in Fig.9 further comprises a driving device 25 for moving the card body of the data storage medium 1' so that the reading unit 3' can read different data storage blocks. The driving device 25 comprises a bi-directional motor 250 and a toothed rack 251. The rack 251 is mounted on a rear portion of a base frame 240 of the carrying unit 24, and extends along the first axis. The motor 250 is electrically connected to the control circuit 40. The control circuit 40 is able to control the motor 250 to drive the motor 250. The motor 250 is mounted in the housing of the apparatus, and has a drive gear 2500 that meshes with the teeth of the rack 251. As such, rotation of the drive gear 2500 results in sliding movement of the base frame 240 along the first axis. When the data storage medium is loaded on a carrier frame 242 of the carrying unit 24, the control circuit 40 controls the driving unit 5 and the driving device 25 to drive the charge coupled device 30 of the reading unit 3 to a position corresponding to one data storage block 1000. With this arrangement, the reading unit 3 can read all of the information stored on the data storage medium 1'.

Additionally, the reading unit 30 in the embodiment may further comprise a laser array, as shown in Fig.5. The laser array is disposed adjacent to the charge coupled device 30 and is able to write information onto the data storage medium 1'. Obviously, the charge coupled device may be replaced with a CMOS sensor, and the functionality of the apparatus will remain unchanged.

In contrast to the prior art, the present invention provides a data storage medium and its associated reading apparatus. The data storage medium has a relatively small size and a relatively large storage capacity, and the apparatus can simultaneously read all of the information stored on one area or on one block of the data storage medium.

Those skilled in the art will readily observe that numerous modifications and alterations of the device may be made while retaining the teachings of the invention. Accordingly, the above disclosure should be construed as limited only by the metes and bounds of the appended claims.

## Claims

1. A data storage medium for storing optically encoded information, the data storage medium comprising:
a rectangular card body having a surface that is formed with a plurality of linearly arranged data storage areas, each of the data storage areas comprising a plurality of essentially parallel and essentially equally spaced data storage tracks;
wherein the data storage tracks are used for storing the optically encoded information.

2. The data storage medium of claim 1 wherein each of the data storage areas is linearly arranged along a first axis that is essentially perpendicular to the data storage tracks.

3. The data storage medium of claim 2 wherein each of the data storage areas is separated into a plurality of data storage blocks that are arranged linearly along a second axis that is transverse to the first axis.

4. An apparatus for reading information stored on a data storage medium, the data storage medium comprising a rectangular card body having a surface that is formed with a plurality of data storage areas, each of the data storage areas having a plurality of essentially parallel and essentially equally spaced data storage tracks, the apparatus comprising:
a reading unit, the reading unit being able to simultaneously read all of the information stored in the data storage tracks of one of the data storage areas;
a driving unit for moving the reading unit from a position corresponding to one data storage area to a position corresponding to another data storage area; and
a controlling unit for receiving the information read by the reading unit.

5. The apparatus of claim 4 wherein the controlling unit further comprising a control circuit for processing in a predetermined way the information read by the reading unit and transferring the processed information to another device.

6. The apparatus of claim 4 or 5 further comprising a housing, the reading unit, the driving unit and the controlling unit disposed within the housing, a side of the housing having a slot for inserting the data storage medium.

7. The apparatus of any one of claims 4 to 6 wherein the reading unit comprising a charge coupled device (CCD) for simultaneously reading all of the information stored on the data storage tracks of one of the data storage areas.

8. The apparatus of claim 7 wherein the driving unit comprising a rotatable shaft extending along a first axis that is along the data storage areas, the charge coupled device installed on the shaft; wherein when the shaft rotates, the charge coupled device moves from a position corresponding to one data storage area to a position corresponding to another data storage area.

9. The apparatus of any one of claims 4 to 6 wherein the reading unit comprising a CMOS sensor for simultaneously reading all of the information stored on the data storage tracks of one of the data storage areas.

10. The apparatus of claim 9 wherein the driving unit comprising a rotatable shaft extending along a first axis that is along the data storage areas, the CMOS sensor installed on the shaft; wherein when the shaft rotates, the CMOS sensor moves from a position corresponding to one data storage area to another position corresponding to another data storage area.

11. The apparatus of claim 7 or 8 wherein the reading unit further comprises a laser array installed adjacent to the charged couple device (CCD) for writing information onto the data storage medium.

12. The apparatus of claim 9 or 10 wherein the reading unit further comprises a laser array installed adjacent to the COMS sensor for writing information onto the data storage medium.

13. An apparatus for reading information stored on a data storage medium, the data storage medium comprising a rectangular card body having a surface that is formed with a plurality of data storage areas, that are arranged linearly along a first axis, each of the data storage areas being separated into a plurality of data storage blocks that are arranged linearly along a second axis transverse to the first axis, each of the data storage blocks having a plurality of essentially parallel and essentially equally spaced data storage tracks, the apparatus comprising:
a reading unit, the reading unit being able to simultaneously read all of the information stored on the data storage tracks of one of the data storage blocks;
a driving unit for moving the reading unit from a position corresponding to one data storage area to a position corresponding to another data-storage area;
a driving device for moving the card body so that the reading unit can read different data storage blocks; and
a controlling unit for receiving the information read by the reading unit.

14. The apparatus of claim 13 wherein the controlling unit further comprises a control circuit for processing in a predetermined way the information read by the reading unit and transferring the processed information to another device.

15. The apparatus of claim 13 or 14 further comprising a housing, the reading unit, the driving unit, the driving device and the controlling unit installed in the housing, a side of the housing having a slot for inserting the data storage medium.

16. The apparatus of any one of claims 13 to 15 wherein the reading unit comprises a charge coupled device (CCD) for simultaneously reading all of the information stored on the data storage tracks of one of the data storage blocks.

17. The apparatus of claim 16 wherein the driving unit comprises a rotatable shaft extending along the first axis, the charge coupled device installed on the shaft; wherein when the shaft rotates, the charge coupled device moves from a position corresponding to one data storage block to a position corresponding to another data storage block.

18. The apparatus of claim 17 further comprising a carrier frame, the driving device moving the carrier frame by a predetermined distance along the second axis.

19. The apparatus of any one of claims 13 to 15 wherein the reading unit comprising a CMOS sensor for simultaneously reading all of the information stored on the data storage tracks of one of the data storage blocks.

20. The apparatus of claim 19 wherein the driving unit comprises a rotatable shaft extending along the first axis parallel to the data storage area, the CMOS sensor installed on the shaft; wherein when the shaft rotates, the CMOS sensor moves from a position corresponding to one data storage block to a position corresponding to another data storage block.

21. The apparatus of claim 20 further comprising a carrier frame, the driving device moving the carrier frame by a predetermined distance along the second axis.

22. The apparatus of any one of claims 16 to 18 wherein the reading unit further comprises a laser array installed adjacent to the charged couple device (CCD) for writing information onto the data storage medium.

23. The apparatus of any one of claims 19 to 21 wherein the reading unit further comprises a laser array installed adjacent to the COMS sensor for writing information onto the data storage medium.
